# EUROPEAN PATENT SPECIFICATION

(11) **EP 1 193 120 B1**
(45) Date of publication and mention of the grant of the patent: **19.12.2007**
(21) Application number: 01123250.1
(22) Date of filing: 02.10.2001
(51) Int. Cl.: B60N 2/72, A47C 31/02, B60N 2/58

(54) **Vehicle seat**
Fahrzeugsitz
Siège de véhicule

(30) Priority: 02.10.2000 JP 2000302658
(43) Date of publication of application: 03.04.2002
(73) Proprietor: Delta Tooling Co., Ltd., Hiroshima 736-0084 (JP)
(72) Inventor: Fujita, Etsunori, Akiku, Hiroshima-shi, Hiroshima 736-0084 (JP); Kawasaki, Seiji, Akiku, Hiroshima-shi, Hiroshima 736-0084 (JP); Ogura, Yumi, Akiku, Hiroshima-shi, Hiroshima 736-0084 (JP); Oda, Tatsuya, Akiku, Hiroshima-shi, Hiroshima 736-0084 (JP); Chizuka, Kazuyoshi, Akiku, Hiroshima-shi, Hiroshima 736-0084 (JP); Ochiai, Naoki, Akiku, Hiroshima-shi, Hiroshima 736-0084 (JP); Takata, Yasuhide, Akiku, Hiroshima-shi, Hiroshima 736-0084 (JP); Nishino, Masaki, Akiku, Hiroshima-shi, Hiroshima 736-0084 (JP)
(74) Representative: HOFFMANN EITLE

(56) References cited:
- EP-A- 1 033 098
- BE-A- 472 991
- GB-A- 1 360 375

## Description

### BACKGROUND OF THE INVENTION

The present invention relates to a vehicle seat for cars and the like.

In recent years, there is a known vehicle seat using a net member of a three-dimensional structure which can provide a high cushioning ability even if it is a thin type and is excellent in air permeability because it has a large number of air gaps as compared with a pad member such as urethane or the like. Its front mesh layer and back mesh layer are connected by a large number of piles to form a truss structure (three-dimensional structure), which is an elastic structure with resistance to settling and is excellent in air permeability, body pressure dispersion characteristics, impact absorbing characteristics and the like.

However, when the net member of a three-dimensional structure is used as a covering member, it is usually supported with most parts of its periphery being wound around each frame member constituting a seat frame, and as a result, it is tightly placed at a considerably high elongation percentage (for example, about 10 % to 20 %). As a result, this net member is in a tension structure, and it has a room for improvement in the point of a vibration absorption characteristic around a resonance point and in a high frequency zone. Further, when the net member of the three-dimensional structure is used as a covering member and a seat with a soft surface touch is to be produced, the net member which is knitted a front mesh layer and a back mesh layer, while strongly tightening monofilaments comprising the mesh layers, with small number of piles between them or with use of piles having a small diameter is used. However, since such a net member is strongly tightened when the front mesh layer and the back mesh layer are knitted, it has small elongation and lacks in stroke comfort, and is unsatisfactory in the point of a holding characteristic for a seated person. Further, since the net member of a three-dimensional structure can provide a high cushioning characteristic, impact absorption characteristic, and the like, a thinner type of it can be used as compared with a pad member such as urethane and the like, and in order to improve seating comfort, a feeling of touch on the seat frames and the like is desired to be as small as possible.

BE 472 991 A discloses a seat structure in which a flexible support element is suspended between front and back members of a frame. The majority of an occupant's weight is supported, in use, by a rigid member supported on the front frame portion. A thick cushion element overlies the flexible support element, to provide padding.

GB 1 360 375 A discloses a seat structure in which a frame member supports a flexible sheet forming a seating surface by way of a plurality of slidable hooks and rubber rings that are distributed around the periphery of said sheet to suspend the sheet within the frame. The sheet may be of canvas or PVC, and a padding layer may be provided on the sheet upper surface.

EP 1 033 098 A discloses a seat in which net-shaped skins are stretched over frame members under tension to support an occupant.

### Summary of the Invention

According to the present invention, there is provided a vehicle seat using a net member of a three-dimensional structure in which a front mesh layer and a back mesh layer are connected with a number of piles, as a covering member, wherein of said covering member, an upper end portion of a seat back section for providing an elastic support force for the back of a seated person and a front end portion of a seat cushion section are fixed to frame members, and side portions of the seat back section are supported to be movable up and down with respect to frame members, and wherein a cushion member layer for providing a supplementary elastic support force to that of the seat back section is provided on a back side of the covering member constituting said seat back section.

Embodiments of the present invention can provide a vehicle seat of a structure which improves in vibration absorption characteristic near a resonance point and in a high frequency zone by placing a covering member with almost no tension exerted on frame members, can provide sufficient stroking comfort and holding characteristic, and is especially suitable for using a net member of a three-dimensional structure with soft surface touch as the covering member. Further embodiments of the invention can provide a vehicle seat which can reduce a feeling of touch on the frame members and the like.

A preferred embodiment of the present invention provides a vehicle seat in which the aforesaid covering member are supported by the frame members at an elongation percentage of less than 5 % under no load.

A preferred embodiment of the present invention provides a vehicle seat further comprising a support member connected to and supported by any of the frame members placed to be laterally spaced, under the covering member constituting the aforesaid seat cushion section, for supporting the covering member constituting the aforesaid seat cushion section and giving a restoring force thereto.

A preferred embodiment of the present invention provides a vehicle seat in which belt-shaped members are laid across the aforesaid support member and the frame members to control a reaction force after deformation of the aforesaid metal spring.

A preferred embodiment of the present invention provides a vehicle seat in which said cushion member layer includes a soft cushion member layer between the aforesaid support member and the covering member.

A further referred embodiment of the present invention provides a vehicle seat in which the aforesaid support member comprises a flat-type elastic member, and is placed with a hard cushion member layer between the aforesaid support member and the aforesaid soft cushion member layer.

A preferred embodiment of the present invention is a vehicle seat in which while the covering member constituting the aforesaid seat cushion section and the covering member constituting the aforesaid seat back section are formed of net members independent from each other, a rear end portion of the covering member constituting the seat cushion section and a lower end portion of the covering member constituting the seat back section are connected.

A preferred embodiment of the present invention is a vehicle seat in which the net member as the covering member constituting the aforesaid seat cushion section is placed so that a direction in which it is more stretchable is along a direction connecting the rear end portion and the front end portion of the seat cushion section, and the net member as the covering member constituting the aforesaid seat back section is placed so that a direction in which it is more stretchable is along a direction connecting side portions of the seat back section.

A preferred embodiment of the present invention is a vehicle seat in which the net members as the respective covering members constituting the aforesaid seat cushion section and the seat back section are respectively placed so that each direction in which they are more stretchable is along each direction connecting the respective side portions.

A preferred embodiment of the present invention is a vehicle seat in which the net member as the covering member constituting the aforesaid seat back section is formed of a soft material with a smaller spring constant than the net member as the covering member constituting the aforesaid seat cushion section.

A preferred embodiment of the present invention is a vehicle seat in which the aforesaid cushion member layer is formed into a final posture support form in which the aforesaid covering member constituting the seat back section is folded toward the back side from both sides, both end edges are joined in substantially a center portion, and the substantially center portion is located in a rearward position from both side portions.

A preferred embodiment of the present invention is a vehicle seat in which a member with stretchability for biasing the covering member in a direction to contract toward substantially the center portion is laid on a back face of the covering member constituting the aforesaid seat back section.

A preferred embodiment of the present invention is a vehicle seat in which both side portions of the covering members constituting the aforesaid seat back section and the seat cushion section are folded toward the back side respectively, and parts thereof located on the frame members are formed into at least a twofold structure.

A preferred embodiment of the present invention is a vehicle seat in which the covering member constituting the aforesaid seat back section is supported by the frame members so that both side portions protrude forward from an inner part thereof and the covering member constituting the aforesaid seat cushion section is supported by the frame members so that both side portions protrude upward from an inner region thereof.

A preferred embodiment of the present invention is a vehicle seat in which border portions between the both side portions in the covering members constituting the aforesaid seat back section and the seat cushion section, and the inner parts are formed into a groove shape.

A preferred embodiment of the present invention is a vehicle seat, wherein the aforesaid border portions are formed by joining a front mesh layer, piles and a back mesh layer of the net member constituting the covering member to one another by vibration welding means.

A preferred embodiment of the present invention is a vehicle seat in which the aforesaid border portions are formed by joining a front mesh layer, piles and a back mesh layer of the net member constituting the covering member to one another in a half-crushed state by vibration welding means and thereafter, by further applying sewing means thereto.

### BRIEF DESCRIPTION OF THE DRAWINGS

To enable a better understanding of the present invention, and to show how the same may be carried into effect, reference will now be made, by way of example only, to the accompanying drawings, in which:-
FIG. 1 is a fragmentary sectional view showing a schematic constitution of a vehicle seat according to one embodiment of the present invention;
FIG. 2 is a view for explaining a constitution of a seat frame of the vehicle seat embodiment of FIG. 1;
FIG. 3 is a sectional view taken along the A-A line in FIG. 1;
FIG. 4 is a sectional view taken along the B-B line in FIG. 1;
FIG. 5 is a view schematically showing a placement method of a seat back covering member and a seat cushion covering member of the vehicle seat of the embodiment of FIG. 1;
FIG. 6 is a fragmentary sectional view showing a schematic constitution of a vehicle seat according to another embodiment of the present invention;
FIG. 7 is a view showing a constitution of a seat frame, a support member and metal springs according to the embodiment of FIG. 6;
FIG. 8 is a sectional view taken along the C-C line in FIG. 7;
FIG. 9 is a sectional view showing part of a net member of a three-dimensional structure used in each of the embodiments of FIGs 1 to 8;
FIG. 10 is an enlarged view showing a front mesh layer of the net member shown in FIG. 9;
FIG. 11 is an enlarged view showing a back mesh layer of the net member shown in FIG. 9; and
FIG. 12 A, FIG. 12B, FIG. 12 C, FIG. 12 D, and FIG. 12E are views for explaining manners in which piles are placed.

### DETAILED DESCRIPTION

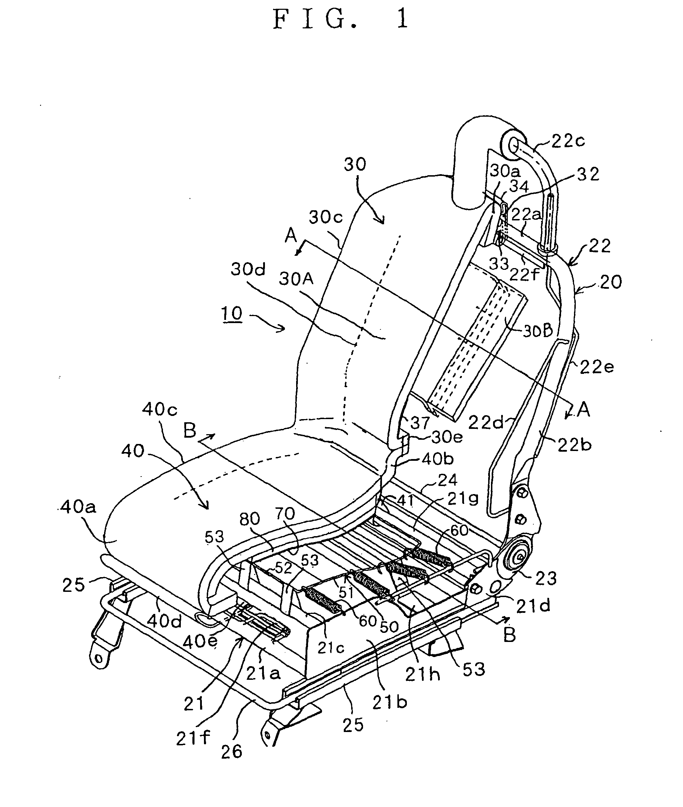

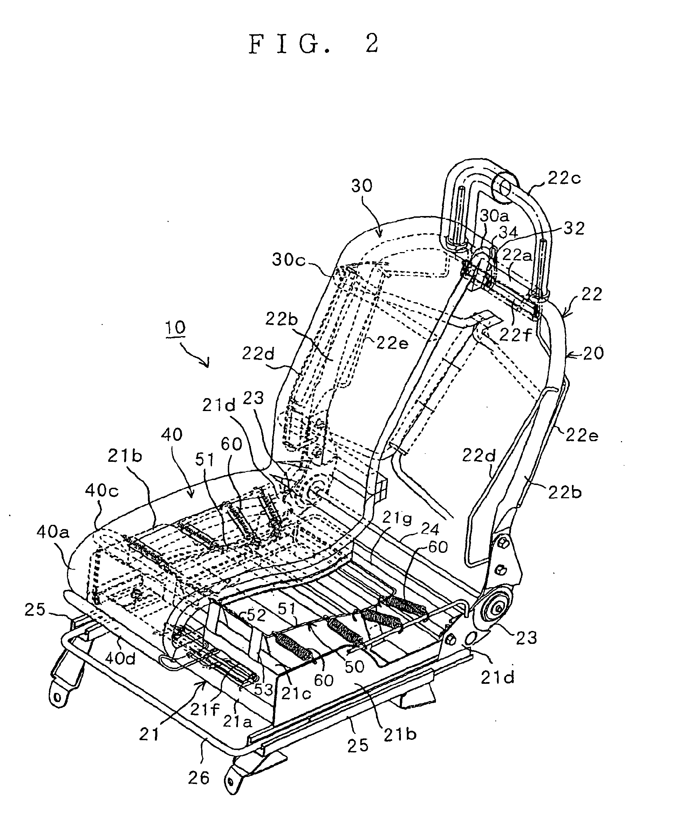

Hereinafter, the vehicle seat will be explained in more detail based on embodiments shown in the drawings. FIG. 1 and FIG. 2 are views each showing an entire structure of a vehicle seat 10 according to one embodiment. As shown in FIG. 1 and FIG. 2, the vehicle seat 10 comprises a seat frame 20, a covering member (a seat back covering member) 30 constituting a seat back section, and a covering member (a seat cushion covering member) 40 for constituting a seat cushion section.

The seat frame 20 comprises a seat cushion frame 21 for forming the seat cushion section and a seat back frame 22 for forming the seat back section. The seat cushion frame 21 comprises a front end frame 21a composed of a frame member in a pipe form at a front end thereof, and side frames 21b and 21b composed of frame members in a plate form. A belt supporting frame 21c composed of a frame member in a pipe form is provided, with some space from the front end frame 21a, between the side frames 21b and 21b. Further, fixed plates 21d and 21d are provided at respective rear portions of the side frames 21b and 21b, and a pipe-shaped rear end frame 21g for drawing in the covering member 30 is laid across the fixed plates 21d and 21d. Connecting plates 23 and 23 are connected to the respective fixed plates 21d and 21d and a support shaft 24 is provided between the connecting plates 23 and 23.

The seat back frame 22 is made by forming a pipe-shaped frame member to be substantially in a shape of the letter of U, and is disposed so that its closed side becomes an upper side, and lower portions of side frames 22b and 22b are connected to the support shaft 24 provided between the aforementioned connecting plates 23 and 23 so as to be reclinable. A head supporting frame 22c formed by bending a pipe-shaped frame member into substantially the shape of the letter of U is attached to an upper end frame 22a between the side frames 22b and 22b. Guide frames 22d and 22d for supporting the seat back covering member 30 movably up and down are provided in front of the respective side frames 22b and 22b along a direction in which the side frames 22b and 22 are disposed. Auxiliary frames 22e and 22e for tightly providing a trim cloth is provided along a direction in which the side frames 22b and 22b are disposed.

In the present embodiment, as shown in FIG. 1 and FIG. 2, the above-described seat cushion frame 21 is supported by a slide frame 26 sliding along a rail member 25 placed on a floor surface of the vehicle to be placed slidable back and forth.

The seat back covering member 30 is doubled by folding over an upper end portion 30a thereof, and is disposed to be in contact with a front surface of the upper end frame 22a. A fixing cloth member 32 is connected to a part in this upper end portion 30a, which protrudes higher than the upper end frame 22a. The fixing cloth member 32 being placed at a back side of the upper end frame 22a. A set plate 33 with a substantially U-shaped cross-section, provided at a lower end of the fixing cloth member 32, is engaged with an engaging plate 22f attached to a lower part of the upper end frame 22a to protrude from it, whereby an attachment position of the upper end portion 30a is fixed. It should be noted that numeral 34 denotes a trim cloth for covering an outer surface of the fixing cloth member 32.

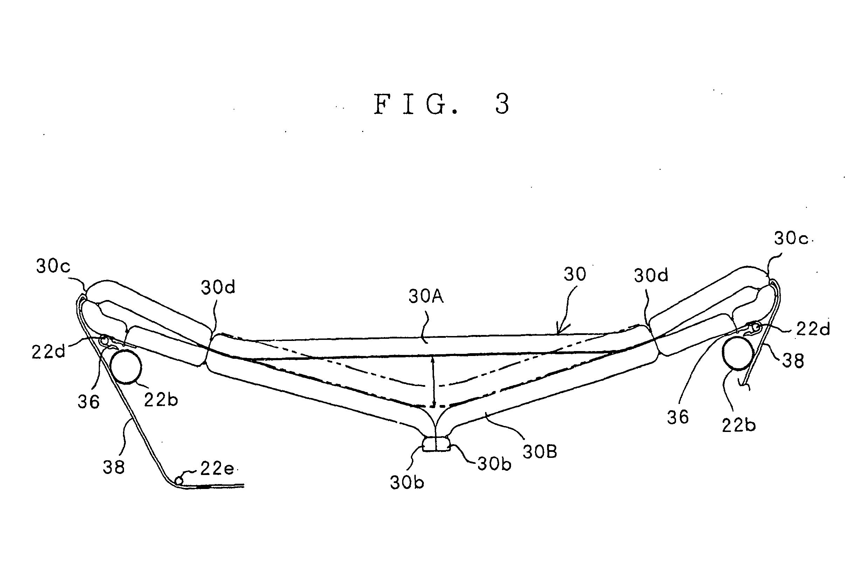

Further, as shown in FIG. 3, the seat back covering member 30 is folded back in front of the side frames 22b and 22b and the guide frames 22d and 22d, and both end edges 30b and 30b are overlaid with each other in substantially a center portion and joined by means such as sewing. The substantially center portion in which both end edges 30b and 30b are joined to each other is provided to locate rearward from side portions 30c and 30c being turning points. Thereby, a final supporting shape for supporting a back of a seated person is formed. A part (a back portion 30B) located on a back side of the seat back covering member 30 from the side portion 30c being one of the turning points to the side portion 30c being the other turning point functions as a cushion member layer for supplementing elasticity feeling and bearing pressure of a front portion 30A of the seat back covering member 30.

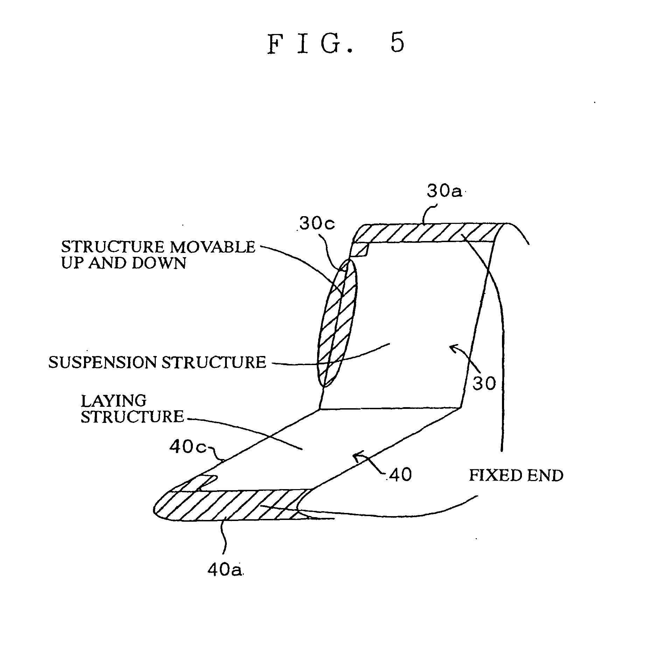

In the seat back covering member 30, set plates 36 and 36 with a substantially U-shaped cross-section are provided along a vertical direction by means such as sewing at a portion near each of the side portions 30c and 30c, in the back portion 30B. The set plates 36 and 36 are engaged with the guide frames 22d and 22d slidably in an up and down direction. Specifically the seat back covering member 30 of the present embodiment has a suspended structure with the position of the upper end portion 30a being fixed and the positions of the side portions 30c and 30c being unfixed, as shown in FIG. 5. The front portion 30A and the back portion 30B are stitched together at positions which are at a predetermined distance inward from the side portions 30c and 30c across attachment positions of the set plates 36 and 36 and thereby fixed to each other, and borders 30d for increasing a holding characteristic for a seated person are formed.

A stretching member 37 composed of a band member made of rubber or the like biased in a shrinking direction toward substantially a center portion is laid on the back surface near a lumber support portion in the front portion 30A of the seat back covering member 30, as shown in FIG. 1. This increases support pressure in the lumber support portion and prevents the front portion 30A is stretched at an extremely low elongation percentage from rising forward as will be described later. Trim cloths 38 and 38 for covering the side frame members 22b and 22b and covering to hide the back portion 30B are attached to the respective side portions 30c and 30c of the seat back covering member 30 by means such as sewing and the like as shown in FIG. 3.

It is preferable that the seat back covering member 30 placed as described above is placed on each frame member constituting the seat back frame 22 so as to have an elongation percentage of less than 5 % under no load. This makes it possible to reduce and prevent deformation by a large load given to a net member of a three-dimensional structure constituting the seat back covering member 30 and settling due to thermal impact, make the spring characteristic of the net member work effectively, and change a direction of input vibration to thereby improve vibration absorbing characteristic.

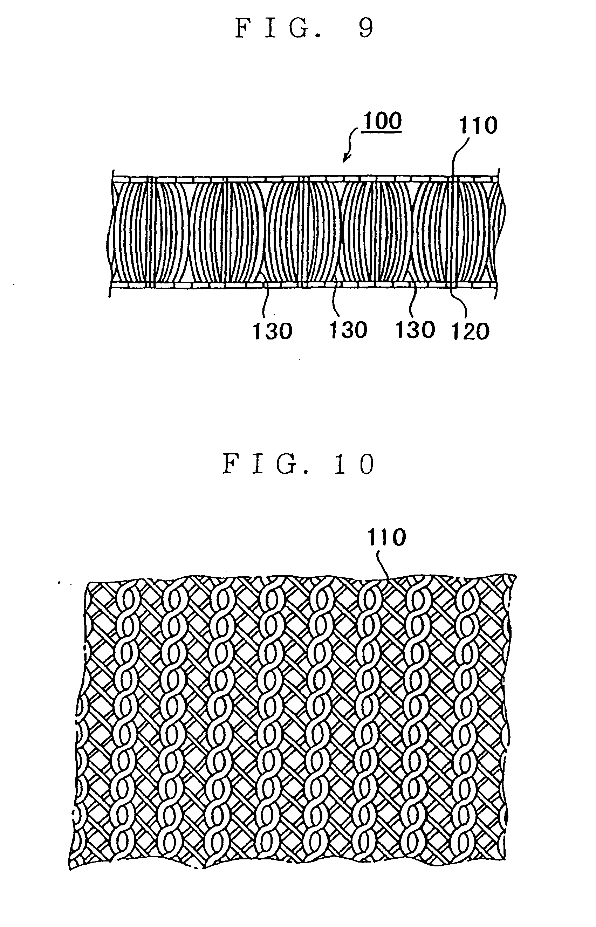

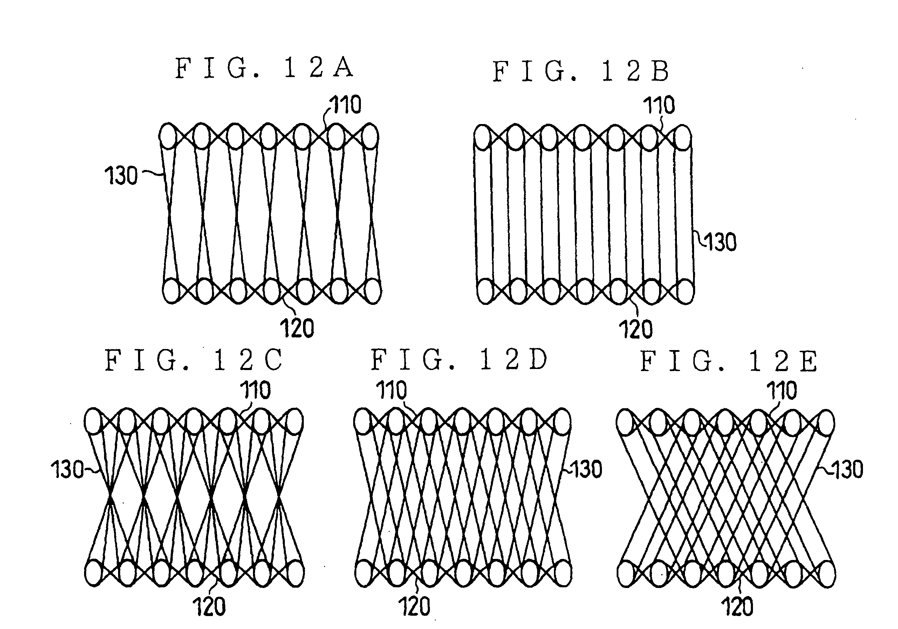

Here, a net member 100 of a three-dimensional structure used as the seat back covering member 30 and the seat cushion covering member 40 that will be described later will be explained based on FIG. 9 to FIG. 12A, FIG. 12B, FIG. 12C, FIG. 12 D, and FIG. 12E. As shown in FIG. 9, the net member 100 is formed of a solid truss structure (three dimensional structure) having a front mesh layer 110, a back mesh layer 120, and a number of piles 130 for connecting the front mesh layer 110 and the back mesh layer 120.

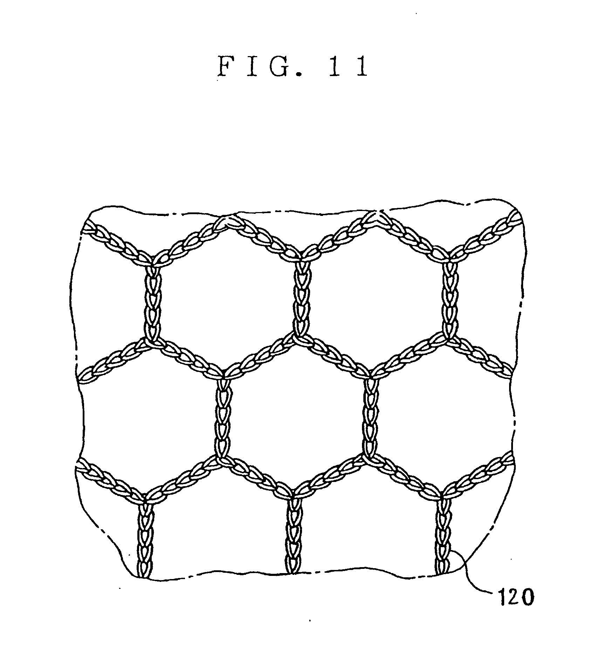

The front mesh layer 110 is formed into a structure having, for instance, a small mesh (fine mesh) by rib knitting of multifilaments stranded from monofilaments, as shown in FIG. 10. On the other hand, the back mesh layer 120 is formed into a structure having, for instance, a honeycombed (hexagonal) mesh made of multifilaments stranded of monofilaments, which is a larger mesh than the front mesh layer 110, as shown in FIG. 11. The pile 130 is formed of monofilaments or multifilaments and is knitted between the front mesh layer 110 and the back mesh layer 120 so that the front mesh layer 110 and the back mesh layer 120 maintain a predetermined space from each other, thereby giving a predetermined stiffness to the net member 100 which is now a three-dimensional mesh knit. Incidentally, when the word "fiber" is simply used in this specification, it means to include spun yarn and the like as well as a monofilament and a multifilament.

In addition, though in the above explanation, the layer having a small mesh of rib knitting is defined as the front face (for instance, a surface of the seat cushion section and the seat back section being in contact with a human body), it is acceptable to define the above as the back face, and the layer having the honeycombed mesh as the front face can be used as the front face. However, in the present embodiment, the vehicle seat has the structure in which the seat back covering member 30 is placed to be movable up and down as described above, and even if the net member 100 with small elongation is used, sufficient stroking comfort can be provided. Accordingly, it is suitable for using the net material 100 with soft surface touch, which is made by knitting the front mesh layer 110 and the back mesh layer 120 while tightening multifilaments thereof firmly with use of a small number of the piles 130 therebetween, or with use of the piles 130 having a small diameter, as the seat back covering member 30 and the seat cushion covering member 40.

As a material of fibers to compose the front mesh layer 110, the back mesh layer 120, or the pile 130, a thermoplastic resin is preferable. The following resins can be used, for instance, thermoplastic polyester resins such as polyethylene terephthalate (PET) and polybutylene terephthalate (PBT), polyamide resins such as nylon 6 and nylon 66, polyolefin resins such as polyethylene and polypropylene, or a mixed resin containing more than two kinds of these resins.

As for the pile 130, for instance, the fiber of 380d or more, preferably 600d or more can be used. Thereby, the load generated by a person who sits on the seat can be supported through deformation of the mesh composing the respective mesh layers 110 and 120, falling and a buckling property of the pile 130, and a restoring force of the adjacent pile 130 giving a spring property to the buckling property, that is, the load can be supported by the buckling property having a restoring force, so that the seat can be of a soft structure without occurrence of concentration of stress. Examples of solid state property values of the net member 100 of the aforementioned three-dimensional structure will be shown in the following table for reference.

**[Table 1]**

| Article number | | 09019D-2W |
|---|---|---|
| Weight (g/m²) | | 1272 |
| Thickness (mm) | | 11.2 |
| Tensile strength | Longitudinal | 101.6 |
| (kg/50mm) | Lateral | 119.5 |
| Elongation | Longitudinal | 45.8 |
| percentage (%) | Lateral | 106.9 |
| Tearing strength | Longitudinal | 91.1 |
| (kg) | Lateral | 81.1 |
| Compressibility (%) (front / back) | | 17.6 |
| Elastic modulus (%) (front / back) | | 83.3 |
| Constant load elongation percentage (%) | Longitudinal | 13.0 |
| | Lateral | 50.1 |
| Residual distortion rate(%) | Longitudinal | 0.2 |
| | Lateral | 3.6 |
| Modulus (%) | Longitudinal 50kg | 23.3 |
| | Lateral 50kg | 63.3 |
| | Longitudinal 75kg | 36.0 |
| | Lateral 75kg | 80.0 |
| | Longitudinal 100kg | 47.0 |
| | Lateral 100kg | 98.7 |

As a manner of disposing the pile 130 (pile structure), it can be classified by a state of the piles 130 connecting the front mesh layer 110 and the back mesh layer 120 seen from the side of the pile 130, more concretely, for instance, it can be classified into the following types as shown in FIG. 12A to FIG. 12E. FIG. 12A and FIG. 12B show a straight type in which the piles 130 are disposed between the respective multifilaments composing the front mesh layer 110 and the respective opposing multifilaments composing the back mesh layer 120, in which FIG. 12A shows a straight type knitted in the shape of the letter "8", while FIG. 12B shows simply knitted straight. From FIG. 12C to FIG. 12E show cross types in which the piles 130 are knitted between respective adjacent multifilaments for the front mesh layer 110 and respective adjacent multifilaments for the back mesh layer 120 in such a manner that the piles 130 cross each other halfway. Among them, FIG. 12C shows another cross type in which the piles 130 are knitted in the shape of the letter "8", FIG. 12D shows a cross type in which the piles 130 are knitted in a simple cross and FIG. 12E shows still another cross type in which the piles 130 are crossed each other bringing two pieces together (double cross).

As shown in FIG. 1, the seat cushion covering member 40 formed of the above-described net member 100 of the three-dimensional structure is disposed to be located on the front end frame 21 a with a front end portion 40a thereof being folded inward halfway. The front end portion is not wound around the outer circumference of the front end frame 21a, but part of the front end portion 40a is located on the front end frame 21a, and therefore a tension feeling of bulging out forward is provided, thereby reducing the feeling of touch of the front end frame 21a.

A fixing cloth member 40d is attached by sewing or the like to a portion protruding forward a little from the front end frame 21a in the front end portion 40a. A set plate 40e formed to have a U-shaped cross-section is fixed to an end portion of the fixing cloth member 40d, and the seat cushion covering member 40 is stretched by engaging the set plate 40e with a mounting frame 21f fixed to protrude inward from the front end frame 21 a.

On the other hand, a rear end portion 40b of the seat cushion covering member 40 is connected to a lower end portion 30e of the seat back covering member 30 by means such as sewing and vibration welding as shown in FIG. 1 and FIG. 2. Further, a suspension cloth 41 wound around the rear end frame 21g is connected to an area near the rear end portion 40b, and the suspension cloth 41 draws in the seat cushion covering member 40 so that it does not rise but stays at a predetermined position.

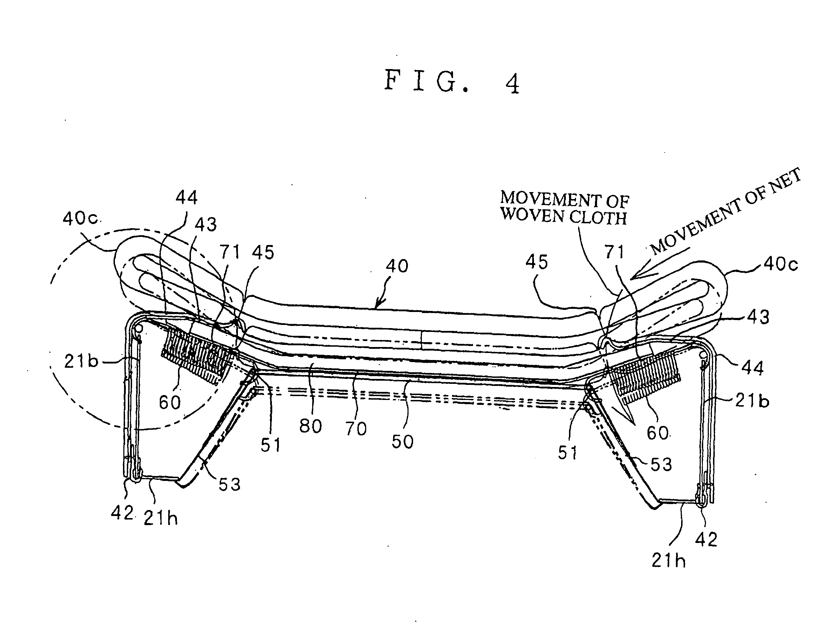

The portions other than the above-described front end portion 40a area and the rear end portion 40b area in the seat cushion covering member 40 has a double structure in a loop form which is folded inward above the side frames 21b and 21b, as shown in FIG. 4. Thus, feeling of touch of the side frames 21b and 21b can be reduced. One ends of woven cloths 43 with the other ends being connected to the side frames 21b and 21b via set plates 42 are connected to and supported at parts inward from the side portions 40c and 40c folded back above the side frames 21b and 21b, whereby borders 45 and 45 are formed on the front face of the seat cushion covering member 40, and the entire shape of seat section is formed with a cross-section in a concave form. Incidentally, a numeral 44 denotes a trim cloth for covering the woven cloth 43.

The seat cushion covering member 40, which is placed on the seat cushion frame 21 in this manner and mounted to be in a laying structure with only the front end portion 40a being fixed as shown in FIG. 5, is also placed at an elongation percentage of less than 5 % under no load as in the above-described seat back covering member 30. Thus, elastic deformation of the net member of the three-dimensional structure constituting the seat cushion covering member 40 and settling due to thermal impact can be reduced and prevented, and spring property sufficiently exerts effect to make it possible to change a direction of input vibration, thereby contributing to the improvement in a vibration absorption characteristic. Further, since the side portions 40c and 40c are not fixed to any frame members and are free ends and the aforementioned elongation percentage (tensile force) under no load is very small, the seat cushion covering member 40 is depressed at an inner part from the borders 45 and 45 almost in parallel while being drawn inward to an extent as shown by the phantom line in FIG. 4 when a person is seated thereon, and therefore the tensile force of the seat cushion covering member 40 does not almost increase when a person is seated. As a result, it does not restrict the movement of a support member 50, metal springs 60 and the like that will be described later and is disposed under the seat cushion covering member 40, and the mechanism of vibration absorption by them is not hindered.

The support member 50 is formed of a so-called Pullmaflex being an elastic member in a flat-type form, which is made by forming a wire into a reed screen form or a net form in this embodiment as shown in FIG. 1 through FIG. 3, and is placed under the above-described seat cushion covering member 40. One end of the metal spring 60, a plurality of which (four at each side in this embodiment) are placed with a predetermined space from each other, with the other ends being engaged with the side frames 21 b and 21b is engaged with each of the side wires 51 and 51 of the support member 50. Thus, the support member 50 is elastically connected to and supported by the side frames 21b and 21b. Further, belt shaped members 53 made of cloth and the like with small stretchability are laid across a space between a front end wire 52 of the support member 50 and the belt supporting frame 21c, and spaces between the side wires 51 and 51 and auxiliary pieces 21 h protruded inward at the side frames 21 band 21 b. The belt-shaped member 53 prevents feeling of hitting from occurring in an upward direction by a reaction force exerted when the metal spring 60 is deformed by the vibration inputted, and also prevents a rebound by the reaction force of the metal spring 60 in such a case as a person with light weight is seated.

A hard cushion member layer 70 such as press felt is laid on a top surface of the support member 50. Further, the hard cushion member layer 70 is laid thereon so that both end portions 71 and 71 thereof cover part of the metal springs 60. Thereby, transmission of feeling of hard touch of the support member 50 formed of a so-called Pullmaflex and the metal springs 60 is prevented. A soft cushion member layer 80 is placed between the hard cushion member layer 70 and the seat cushion covering member 40. The soft cushion member layer 80 works to reduce the feeling of touch of the support member 50 and the metal springs 60 in cooperation with the above-described hard cushion member layer 70, and has the function of increasing stroking comfort or feeling of thickness of the seat cushion covering member 40. The soft cushion member layer 80 is preferably formed of the net member 100 of the three-dimensional structure described above which has a high cushioning characteristic and is light-weight.

According to the vehicle seat 1 of this embodiment, the seat cushion covering member 40 is located as shown by the solid line in FIG. 4 under no load, but when a person is seated thereon, the part inward from the borders 45 and 45 are depressed substantially in parallel as the seat cushion covering member 40 shrinks a little toward the inside, as shown by the phantom line in FIG. 4. Following this, the soft cushion member layer 80, the hard cushion member layer 70 and the support member 50 are depressed substantially in parallel. Meanwhile, the parts outside the borders 45 and 45 of the seat cushion covering member 40 roll inwardly while being depressed as shown by the arrow in FIG. 4, and the side portions 40c and 40c relatively rise. As a result, even when a load of a seated person is exerted thereon, the tensile force does not almost increase in the inward part from the borders 45 and 45 of the seat cushion covering member 40, and therefore movements of the support member 50 and the metal springs 60 are not hindered. If the seat cushion covering member 40 is strained tightly, movements by the restoring force of the metal springs 60 are suppressed. That is, the seat cushion covering member 40 needs to be set under the above-described tension so that the metal springs 60 do not actively work in a static seating state, but the metal springs 60 function with phase delay when an impulsive vibration and a force caused by a large displacement are exerted thereon. Also, the seat cushion member 40 to be set under the above-described tension does not prevent the movements of the metal springs 60, whereby a vibration absorption characteristic is sufficiently shown in a high-frequency zone.

Further, when a load of a seated person is exerted thereon, the side portions 40c and 40c relatively rise while the parts outside the borders 45 and 45 of the seat cushion covering member 40 are rolling, and thus holding characteristic for the seated person can be improved.

Meanwhile, when the seat cushion frame 21 moves up and down as a result that large vibrations are inputted, then following this, the metal springs 60 are extended and contracted, and for example, they swing downward with respect to the side frames 21b and 21b, a large reaction force is exerted. In this case, the belt-shaped member 53 engaged with the support member 50 restricts the movement occurring by the reaction force and the strong feeling of touch or thrust of the metal springs 60.

Since set tensile force of the front portion 30A is very small in the seat back covering member 30, the front portion 30A is depressed rearward as a result that a person is seated and acceleration is inputted, and is supported by the back portion 30B. As a result, the side portions outside the borders 30d and 30d are relatively bulged out forward and can hold a back of the seated person reliably. The seat back covering member 30 is fixed only at the upper position and is not fixed at the side portions 30c and 30c to be movable up and down. Accordingly, when vibrations are inputted, the seat back covering member 30 relatively moves up and down with respect to the seat back frame 22 together with the seat cushion covering member 40 connected to it at the lower end portion even if stretchability of the seat back covering member 30 itself is small, and therefore stroking function can be made up.

Though the borders 30d and 45 for increasing holding characteristic in the seat back section and the seat cushion section are formed by sewing in the above-described explanation, it is preferable that they are formed by welding the front mesh layers 110, the piles 130 and the back mesh layers 120 of the net members 100 of the three-dimensional structure composing the seat back covering member 30 and the seat cushion covering member 40 to one another by vibration welding with the welding width of a several millimeters (for example, about 3mm to 5mm). When the borders 30d and 45 of the covering members are made to be small in thickness by the vibration welding, the hardness of the borders 30d and 45 can be increased as compared with the case in which they are formed by sewing. As a result, when a person is seated in the inner part from the borders 30d and 45, the back and seat covering members 30 and 40 can be easily bent at the borders 30d and 45 and the side parts are easily bulged out, whereby holding characteristic is improved. Further, after the front mesh layers 110, the piles 130 and the back mesh layers 120 of the net members 100 of the three-dimensional structure are welded to one another by vibration welding means in a half crushed state, it is possible to apply sewing means onto them to form the above-described borders 30d and 45. In this case, as compared with the case in which they are formed only by the sewing means, while the hardness of the borders 30d and 45 can be increased, spring characteristic remains to an extent because they are in the half-crushed state and thus a seated person can be given feeling of softness.

Further, in this embodiment, the net member composing the seat cushion covering member 40 and the net member composing the seat back covering member 30 are formed by independent net members respectively. Thus, when a vibration is inputted, a phase delay occurs between the seat cushion covering member 40 and the seat back covering member 30, and vibration absorption characteristic is improved. On the other hand, since the rear end portion 40b of the seat cushion covering member 40 and the lower end portion 30e of the seat back covering member 30 are connected by means of sewing, vibration welding or the like to be integrated, following ability is improved and feeling of fit to the seated person is improved.

In this case, the seat cushion covering member 40 can be stretched so that a direction of the net member 100, in which it is more stretchable, is placed along a longitudinal direction, that is, along a direction connecting the front end portion 40a and the rear end portion 40b, and the seat back covering member 30 can be stretched so that a direction of the net member 100, in which it is more stretchable, is placed in a lateral direction, that is, between the side portions 30c and 30c. Thus, holding characteristic of the seat back covering member 30 is improved. In the seat cushion covering member 40, holding characteristic is somewhat smaller because it cannot easily stretch laterally, but it has the advantage that a seating angle can be easily set and turning of a pelvis can be prevented. Further, the net member 100 composing the seat cushion covering member 40 can be also stretched so that the direction in which it is more stretchable is placed in a lateral direction, that is, between the side portions 40c and 40c. In this case, the seat cushion covering member 40 tends to strain in the longitudinal direction and a pelvis easily turns, but a vehicle seat excellent in a holding characteristic can be provided.

Further, it is also preferable that the materials of the net members 100 composing the seat back covering member 30 and the seat cushion covering member 40 are made different from each other and means for forming the seat back covering member 30 from a soft net member with a smaller spring constant than the net member of the seat cushion covering member 40 is adopted. According to this structure, stability at the time of being seated can be also improved, and the net members having restoring characteristics suitable to them can be adopted, therefore contributing to improvement in outer appearance thereof and further improvement in a vibration absorbing characteristic.

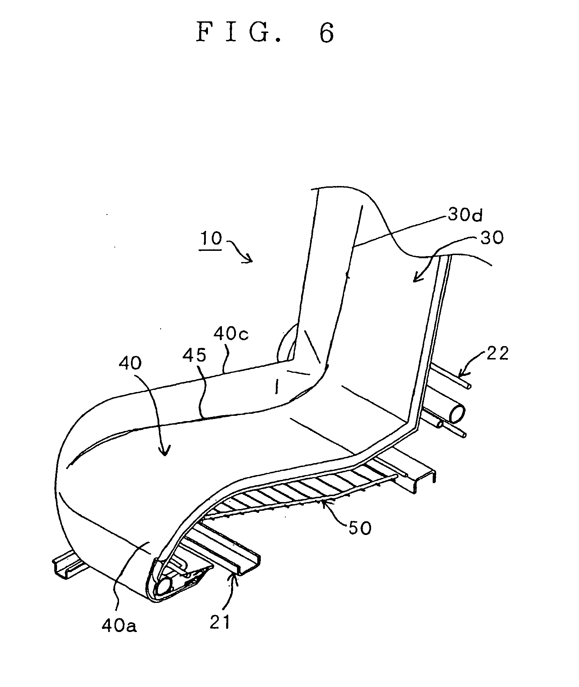

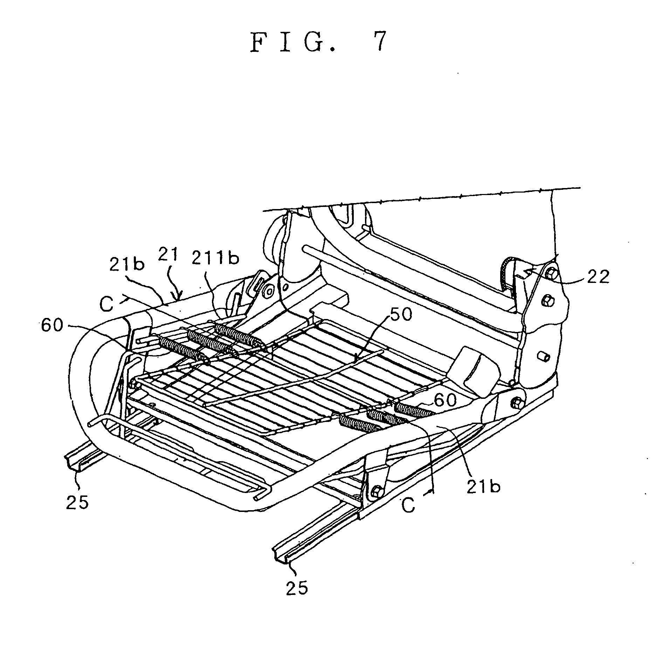

FIG. 6 to FIG. 8 are drawings showing a vehicle seat 10 according to another embodiment. This embodiment differs from the above-described embodiment in the point that the covering member has a one-piece structure united integrally with the seat back covering member 30 and the seat cushion covering member 40, which are formed of a sheet of the net member 100 having the three-dimensional structure. This embodiment is the same as the above-described embodiment in the point that the seat back covering member 30 is placed in a suspension structure in which its upper portion is fixed and the seat cushion covering member 40 is placed in a laying structure in which the front end portion 40a is fixed. Further, it is also the same as the above-described embodiment in the point that the seat back covering member 30 and the seat cushion covering member 40 are placed at an elongation percentage of less than 5 %.

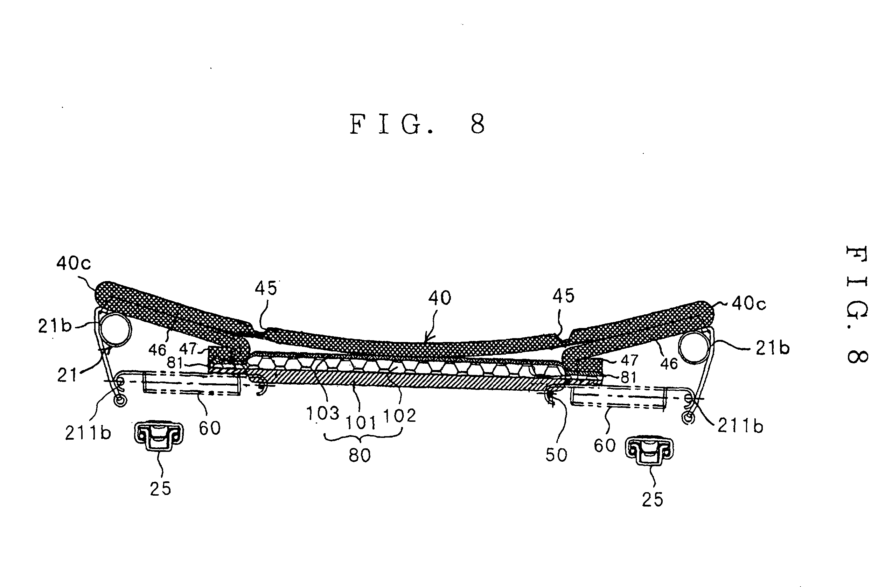

However, the placement structure of the seat cushion covering member 40 is different. Specifically, in the above-described embodiment, the seat cushion covering member 40 is folded to be a loop form, but in this embodiment, as shown in FIG. 8, the seat cushion covering member 40 is folded inward from the side portions 40c and 40c, and it is further folded outward at a midway of the inward folded pieces 46. Outward folded pieces 47 folded outward at a midway are located above the metal springs 60. Thus, the outward folded pieces 47 and the inward folded pieces 46 are overlaid onto a part of the seat cushion covering member 40 to be in a threefold structure, whereby feeling of touch of the metal springs 60 is prevented or reduced, and as a result that they stroke in a thickness direction, comfort that a person feels (stroking comfort or feeling of thickness) can be improved. Further, since the seat cushion covering member 40 is twofold on the side frames 21b and 21b, feeling of touch of the side frames 21 is reduced. Incidentally, in this embodiment, the metal springs 60 are engaged with auxiliary frames 211 b placed under the side frames 21 b.

Further, in this embodiment, three net members 101, 102, and 103 laid one upon another as a soft cushion member layer 80 are placed on the support member 50 composed of a so-called Pullmaflex, and thereby stroke comfort (feeling of thickness) of the seat cushion covering member 40 is supplemented as well as feeling of touch of the support member 50 is reduced. Both side end portions 81 and 81 of the soft cushion member layer 80 constituted by the three net members 101 to 103 are machined to be thin by vibration welding to have higher hardness, and thereafter, they are provided between the outward folded pieces 47 of the above-described seat cushion covering member 40 and the metal springs 60. Accordingly, the both side end portions 81 and 81 performs function of the hard cushion member layer 70 in the above-described embodiment, and reduces the feeling of touch of the metal springs 60.

As each of the net members 101 to 103 constituting the soft cushion member layer 80, the above-described net member 100 in a three-dimensional structure can be used, and a structure, thickness and the like of each of the net members 101 to 103 are properly selected. Further, in this embodiment, the soft cushion member layer 80 is constructed by overlaying three net members 101 to 103, the number of the net members may be more than three, and it may be two, or it may be one as long as a desired stroking comfort (feeling of thickness) can be obtained.

The detailed structure of the seat back covering member 30 is not shown, but as in the above-described embodiment, the upper portion is fixed while the side portions are provided to be movable up and down. Further, in both of the seat back covering member 30 and the seat cushion covering member 40, the borders 30d and 45 are formed by vibration welding in an up and down direction in the seat back covering member 30 and in the longitudinal direction in the seat cushion covering member 40 near portions a predetermined length inward from the respective side portions.

Since the seat cushion covering member 40 is placed at an extremely low elongation percentage also in this embodiment, a tensile force does not increase even if a person is seated thereon, and therefore the movements of the metal springs 60 placed under it are not hindered. Accordingly, vibration absorption action by the metal springs 60, the support member 50 and the like is favorably provided. Further, the structure allows up and down movement of the seat back covering member 30, and therefore stroke shortage cannot be felt even if the net member 100 of the three-dimensional structure with small elongation is used.

In the above-described embodiments, a so-called Pullmaflex with metal wires being formed into a shape of a reed screen or a net shape is shown as an example of the substantially flat-type elastic member constituting the support member 50, but the net member 100 having the three-dimensional structure in which wires are placed at both side portions, or in which synthetic resin plates are integrated with both side portions by vibration welding can be used as the support member 50. Thereby, the metal springs 60 can be engaged with these wires and the like.

As explained above, the vehicle seat has a structure in which the net member having the three-dimensional structure in which the front mesh layer and the back mesh layer are connected with a number of piles is used as the covering member, and the upper end portion of the seat back section and the front end portion of the seat cushion section are fixed to the frame members so that the side portions of the seat back section are supported to be movable up and down with respect to the frame members, and the covering member is placed at an extremely low elongation percentage. Accordingly, the movements of the support member, the metal springs and the like placed under the covering member are not restricted, the mechanism of the vibration absorption by them is not hindered. Thus, the vehicle seat is excellent in the vibration absorption characteristic. Further, the seat back section is movable up and down relatively with respect to the frame members, and therefore a seated person feels comfortable by the stroking of the seat back section, even if the elongation of net member is small. Furthermore, the covering member is provided at a low elongation percentage, and therefore the covering member can hold a seated person to feel comfortable. Further, the covering member in the portions located on the frame members is in at least a twofold structure, feeling of touch to the frame members, metal springs, and the like can be reduced.

## Claims

1. A vehicle seat (10) using a net member (100) of a three-dimensional structure in which a front mesh layer and a back mesh layer are connected with a number of piles, as a covering member (30,40),
wherein of said covering member (30,40), an upper end portion (30a) of a seat back section (30) for providing an elastic support force for the back of a seated person and a front end portion (40a) of a seat cushion section (40) are fixed to frame members (21b, 22b), and side portions (30c) of the seat back section (30) are supported to be movable up and down with respect to frame members (22b), and
wherein a cushion member layer (30B) for providing a supplementary elastic support force to that of the seat back section (30) is provided on a back side of the covering member constituting said seat back section (30).

2. The vehicle seat (10) according to claim 1,
wherein said covering member (30, 40) are supported by the frame members (21b, 22b) at an elongation percentage of less than 5% under no load.

3. The vehicle seat (10) according to claim 1 or 2, further comprising:
a support member (50) connected to and supported by any of the frame members (21b, 22b) placed to be laterally spaced, under the covering member (30, 40) constituting said seat cushion section (40), for supporting the covering member (30, 40) constituting said seat cushion section (40) and giving a restoring force thereto.

4. The vehicle seat (10) according to claim 3,
wherein belt-shaped members (53) are laid across said support member (50) and the frame members (21b, 22b) to control a reaction force after deformation of a metal spring (60).

5. The vehicle seat (10) according to claim 3 or 4,
wherein said cushion member layer includes a soft cushion member layer (80) provided between said support member (50) and the covering member (40).

6. The vehicle seat (10) according to claim 5,
wherein said support member (50) comprises a flat-type elastic member, and is placed with a hard cushion member layer (70) between said support member (50) and said soft cushion member layer (80).

7. The vehicle seat (10) according to any preceding claim,
wherein while the covering member (40) constituting said seat cushion section (40) and the covering member (30) constituting said seat back section (30) are formed of net members (100) independent from each other, rear end portion (40b) of the covering member constituting the seat cushion section (40) and a lower end portion (30e) of the covering member constituting the seat back section (30) are connected.

8. The vehicle seat (10) according to claim 7,
wherein the net member (100) as the covering member (40) constituting said seat cushion section (40) is placed so that a direction in which it is more stretchable is along a direction connecting the rear end portion (40b) and the front end portion (40a) of the seat cushion section (40), and the net member as the covering member (30) constituting said seat back section (30) is placed so that a direction in which it is more stretchable is along a direction connecting side portions (30c) of the seat back section (30).

9. The vehicle seat (10) according to claim 7 or 8,
wherein the net members (100) as the respective covering members (30,40) constituting said seat cushion section (40) and the seat back section (30) are respectively placed so that each direction in which they are more stretchable is along each direction connecting the respective side portions (30c).

10. The vehicle seat (10) according to any preceding claim,
wherein the net member (100) as the covering member (30) constituting said seat back section (30) is formed of a soft material with a smaller spring constant than the net member (100) as the covering member (40) constituting said seat cushion section (40).

11. The vehicle seat (10) according to any preceding claim, wherein said cushion member layer (30B), is formed into a final posture support form in which said covering member (30) constituting the seat back section (30) is folded toward the back side from both sides, both end edges (30b) are joined in a substantially center portion, the substantially center portion is located in a rearward position from both side portions (30c).

12. The vehicle seat (10) according to any preceding claim, wherein a member with stretchability for biasing the covering member in a direction to contract toward substantially the center portion is laid on a back face of the covering member (30) constituting said seat back section (30).

13. The vehicle seat (10) according to any preceding claim,
wherein both side portions of the covering members (30, 40) constituting said seat back section (30) and the seat cushion section (40) are folded toward the back side respectively, and parts thereof located on the frame members (21b,22b) are formed into at least a twofold structure.

14. The vehicle seat (10) according to any preceding claim,
wherein the covering member (30) constituting said seat back section (30) is supported by the frame members (21b, 22b) so that both side portions protrude forward from an inner part thereof and the covering member (40) constituting said seat cushion section (40) is supported by the frame members (21b,22b) so that both side portions protrude upward from an inner part thereof.

15. The vehicle seat (10) according to claim 14,
wherein border portions between the both side portions (30c,40c) in the covering members (30,40) constituting said seat back section (30) and the seat cushion section (40), and the inner parts are formed into a groove shape .

16. The vehicle seat (10) according to claim 15,
wherein said border portions are formed by joining a front mesh layer (110), piles (130) and a back mesh layer (120) of the net member (100) constituting the covering member to one another by vibration welding means.

17. The vehicle seat (10) according to claim 15,
wherein said border portions are formed by joining a front mesh layer (110), piles (130) and a back mesh layer (120) of the net member (100) constituting the covering member (30,40) to one another in a half-crushed state by vibration welding means and thereafter, by further applying sewing means thereto.

## Patentansprüche

1. Fahrzeugsitz (10), der ein Netzelement (100) mit einer dreidimensionalen Struktur nutzt, bei der eine vordere Maschenlage und eine hintere Maschenlage mit einer Anzahl von Floren verbunden sind, als ein Abdeckungselement (30, 40),
wobei das Abdeckungselement (30, 40), ein oberer Endabschnitt (30a) eines hinteren Sitzteils (30) zum Vorsehen einer elastischen Stützkraft für den Rücken einer sitzenden Person und ein vorderer Endabschnitt (40a) eines Sitzkissenteils (40) an Rahmenelementen (21b, 22b) befestigt sind, und wobei Seitenabschnitte (30c) des hinteren Sitzteils (30) gestützt werden, um hoch und runter bezüglich der Rahmenelemente (22b) bewegbar zu sein, und
wobei eine Kissenelementlage (30B) zum Vorsehen einer zusätzlichen elastischen Stützkraft zu derjenigen des hinteren Sitzteils (30) an einer hinteren Seite des Abdeckungselements vorgesehen ist, welches das hintere Sitzteil (30) bildet.

2. Fahrzeugsitz (10) nach Anspruch 1, bei dem das Abdeckungselement (30, 40) durch die Rahmenelemente (21b, 22b) bei einem Verlängerungsprozentsatz von weniger als 5% bei keiner Last gestützt wird.

3. Fahrzeugsitz (10) nach Anspruch 1 oder 2, ferner mit:
einem Stützelement (50), das mit jedem der Rahmenelemente (21b, 22b), die so platziert sind, dass sie seitlich beabstandet sind, verbunden ist und durch sie gestützt wird, unter dem Abdeckungselement (30, 40), das den Sitzkissenteil (40) bildet, zum Stützen des Abdeckungselements (30, 40), das den Sitzkissenteil (40) bildet, und um eine Rückstellkraft daran zu geben.

4. Fahrzeugsitz (10) nach Anspruch 3, bei dem gurtförmige Elemente (53) über das Stützelement (50) und die Rahmenelemente (21b, 22b) gelegt sind, um eine Reaktionskraft nach Verformung einer Metallfeder (60) zu kontrollieren.

5. Fahrzeugsitz (10) nach Anspruch 3 oder 4, bei dem die Kissenelementschicht eine weiche Kissenelementschicht (80) umfasst, die zwischen dem Stützelement (50) und dem Abdeckungselement (40) vorgesehen ist.

6. Fahrzeugsitz (10) nach Anspruch 5, bei dem das Stützelement (50) ein flaches elastisches Element umfasst, und mit einer harten Kissenelementlage (70) zwischen dem Stützelement (50) und der weichen Kissenelementlage (80) platziert ist.

7. Fahrzeugsitz (10) nach einem der vorhergehenden Ansprüche, bei dem, während das Abdeckungselement (40), das den Sitzkissenteil (40) bildet, und das Abdeckungselement (30), das den hinteren Sitzteil (30) bildet, aus voneinander unabhängigen Netzelementen (100) ausgebildet sind, ein Rückendabschnitt (40b) des Abdeckungselements, das den Sitzkissenteil (40) bildet, und ein unterer Endabschnitt (30e) des Abdeckungselements, das den hinteren Sitzabschnitt (30) bildet, verbunden sind.

8. Fahrzeugsitz (10) nach Anspruch 7, bei dem das Netzelement (100) als das Abdeckungselement (40), das den Sitzkissenteil (40) bildet, so platziert ist, dass eine Richtung in der es dehnbarer ist, entlang einer Richtung ist, die den Rückendabschnitt (40b) und den vorderen Endabschnitt (40a) des Sitzkissenteils (40) verbindet, und wobei das Netzelement als das Abdeckungselement (30), das den hinteren Sitzteil (30) bildet, so platziert ist, dass eine Richtung in der es dehnbarer ist, eine Richtung entlang verbindender Seitenabschnitte (30c) des hinteren Sitzteils (30) ist.

9. Fahrzeugsitz (10) nach Anspruch 7 oder 8, bei dem die Netzelemente (100) als die jeweiligen Abdeckungselemente (30, 40), die den Sitzkissenteil (40) und den hinteren Sitzteil (30) bilden, jeweils so platziert sind, dass jede Richtung, in der sie dehnbarer sind, entlang jeder Richtung ist, welche die jeweiligen Seitenabschnitte (30c) verbindet.

10. Fahrzeugsitz (10) nach einem der vorhergehenden Ansprüche, bei dem das Netzelement (100) als das Abdeckungselement (30), das den hinteren Sitzteil (30) bildet, aus einem weichen Material mit einer kleineren Federkonstante ausgebildet ist als das Netzelement (100), als das Abdeckungselement (40), das den Sitzkissenteil (40) bildet.

11. Fahrzeugsitz (10) nach einem der vorhergehenden Ansprüche, bei dem die Kissenelementlage (30B) in eine endgültige Stellungsstützform ausgebildet ist, in der das Abdeckungselement (30, das den hinteren Sitzteil (30) bildet, von beiden Seiten zu der hinteren Seite gefaltet ist, wobei beide Endkanten (30b) in einem im Wesentlichen zentralen Abschnitt gefügt sind, wobei sich der im Wesentlichen zentrale Abschnitt in einer rückwärtigen Position von beiden Seitenabschnitten (30c) befindet.

12. Fahrzeugsitz (10) nach einem der vorhergehenden Ansprüche, bei dem ein Element mit einer Dehnbarkeit zum Vorspannen des Abdeckungselements in einer Richtung, um sich im Wesentlichen zu dem zentralen Abschnitt zusammenzuziehen, auf eine hintere Fläche des Abdeckungselements (30) gelegt ist, das den hinteren Sitzteil (30) bildet.

13. Fahrzeugsitz (10) nach einem der vorhergehenden Ansprüche, bei dem beide Seitenabschnitte der Abdeckungselemente (30, 40), die den hinteren Sitzteil (30) und den Sitzkissenteil (40) bilden, jeweils zu der hinteren Seite gefaltet sind, und wobei Teile davon, die sich an den Rahmenelementen (21b, 22b) befinden, in zumindest einer doppelten Struktur ausgebildet sind.

14. Fahrzeugsitz (10) nach einem der vorhergehenden Ansprüche, bei dem das Abdeckungselement (30), das den hinteren Sitzteil (30) bildet, durch die Rahmenelemente (21b, 22b) gestützt ist, so dass beide Seitenabschnitte von einem inneren Teil davon nach vorne vorstehen, und das Abdeckungselement (40), das den Sitzkissenteil (40) bildet, durch die Rahmenelemente (21b, 22b) gestützt ist, so dass beide Seitenabschnitte von einem inneren Teil davon nach oben vorstehen.

15. Fahrzeugsitz (10) nach Anspruch 14, bei dem Grenzabschnitte zwischen den beiden Seitenabschnitten (30c, 40c) in den Abdeckungselementen (30, 40), die den hinteren Sitzteil (30) und den Sitzkissenteil (40) bilden, und den inneren Teilen in einer Nutform ausgebildet sind.

16. Fahrzeugsitz (10) nach Anspruch 15, bei dem die Grenzabschnitte ausgebildet sind durch Aneinanderfügen einer vorderen Maschenlage (110), Floren (130) und einer hinteren Maschenlage (120) des Netzelements (100), welches das Abdeckungselement bildet, durch eine Vibrationsschweißeinrichtung.

17. Fahrzeugsitz (10) nach Anspruch 15, bei dem die Grenzabschnitte ausgebildet sind durch Aneinanderfügen in einem Halbcrush-Zustand einer vorderen Maschenlage (110), Floren (130) und einer hinteren Maschenlage (120) des Netzelements (100), welches das Abdeckungselement (30, 40) bildet, durch eine Vibrationsschweißeinrichtung, und danach durch weitere Anwendung einer Näheinrichtung darauf.

## Revendications

1. Siège de véhicule (10) utilisant un élément de filet (100) ayant une structure à trois dimensions où une couche de maille avant et une couche de maille arrière sont reliées par un nombre de piles, comme un élément de couverture (30, 40),
où dudit élément de couverture (30, 40), une portion d'extrémité supérieure (30a) d'une section de dossier de siège (30) pour fournir une force de soutien élastique pour le dos d'une personne assise et une portion d'extrémité avant (40a) d'une section de coussin de siège (40) sont fixées à des éléments de châssis (21b, 22b), et des portions latérales (30c) de la section de dossier de siège (30) sont soutenues de sorte à être mobiles vers le haut et vers le bas par rapport à des éléments de châssis (22b), et
où une couche d'élément de coussin (30B) pour fournir une force de soutien élastique supplémentaire à celle de la section de dossier de siège (30) est pourvue sur un côté arrière de l'élément de couverture constituant ladite section de dossier de siège (30).

2. Siège de véhicule (10) selon la revendication 1,
dans lequel ledit élément de couverture (30, 40) est soutenu par les éléments de châssis (21b, 22b) à un pourcentage d'allongement inférieur à 5% lorsqu'il n'y a aucune charge.

3. Siège de véhicule (10) selon la revendication 1 ou 2, comprenant en plus:
un élément de soutien (50) relié à et soutenu par l'un quelconque des éléments de châssis (21b, 22b) placé de manière à être latéralement espacé, sous l'élément de couverture (30, 40) constituant ladite section de coussin de siège (40), pour soutenir l'élément de couverture (30, 40) constituant ladite section de coussin de siège (40) et lui apportant une force de rappel.

4. Siège de véhicule (10) selon la revendication 3,
dans lequel des éléments en forme de ceinture (53) sont posés à travers ledit élément de soutien (50) et les éléments de châssis (21b, 22b) pour commander une force de réaction après déformation d'un ressort métallique (60).

5. Siège de véhicule (10) selon la revendication 3 ou 4,
dans lequel ladite couche d'élément de coussin inclut une couche d'élément de coussin souple (80) pourvue entre ledit élément de soutien (50) et l'élément de couverture (40).

6. Siège de véhicule (10) selon la revendication 5,
dans lequel ledit élément de soutien (50) comprend un élément élastique de type plat, et est placé avec une couche d'élément de coussin dur (70) entre ledit élément de soutien (50) et ladite couche d'élément de coussin souple (80).

7. Siège de véhicule (10) selon l'une quelconque des revendications précédentes,
dans lequel tandis que l'élément de couverture (40) constituant ladite section de coussin de siège (40) et l'élément de couverture (30) constituant ladite section de dossier de siège (30) sont formés d'éléments de filet (100) indépendants les uns des autres, une portion d'extrémité arrière (40b) de l'élément de couverture constituant la section de coussin de siège (40) et une portion d'extrémité inférieure (30e) de l'élément de couverture constituant la section de dossier de siège (30) sont reliées.

8. Siège de véhicule (10) selon la revendication 7,
dans lequel l'élément de filet (100) comme l'élément de couverture (40) constituant ladite section de coussin de siège (40) est placé de telle sorte qu'une direction dans laquelle il est plus étirable soit le long d'une direction reliant la portion d'extrémité arrière (40b) et la portion d'extrémité avant (40a) de la section de coussin de siège (40), et l'élément de filet comme l'élément de couverture (30) constituant ladite section de dossier de siège (30) est placé de telle sorte qu'une direction dans laquelle il est plus étirable soit le long d'une direction reliant des portions latérales (30c) de la section de dossier de siège (30).

9. Siège de véhicule (10) selon la revendication 7 ou 8,
dans lequel les éléments de filet (100) comme les éléments de couverture respectifs (30, 40) constituant ladite section de coussin de siège (40) et la section de dossier de siège (30) sont respectivement placés de telle sorte que chaque direction dans laquelle ils sont plus étirables soit le long de chaque direction reliant les portions latérales respectives (30c).

10. Siège de véhicule (10) selon l'une quelconque des revendications précédentes,
dans lequel l'élément de filet (100) comme l'élément de couverture (30) constituant ladite section de dossier de siège (30) est formé d'un matériau souple avec une constante de ressort plus petite que l'élément de filet (100) comme l'élément de couverture (40) constituant ladite section de coussin de siège (40).

11. Siège de véhicule (10) selon l'une quelconque des revendications précédentes,
dans lequel ladite couche d'élément de coussin (308), est formée en une forme de soutien de posture finale où ledit élément de couverture (30) constituant la section de dossier de siège (30) est replié vers le côté arrière à partir des deux côtés, les deux bords d'extrémités (30b) sont unis dans une portion substantiellement centrale, la portion substantiellement centrale est située dans une position vers l'arrière par rapport aux deux portions latérales (30c).

12. Siège de véhicule (10) selon l'une quelconque des revendications précédentes,
dans lequel un élément avec une aptitude à l'étirement pour maintenir l'élément de couverture dans une direction pour se contracter vers substantiellement la portion centrale est posé sur une face arrière de l'élément de couverture (30) constituant ladite section de dossier de siège (30).

13. Siège de véhicule (10) selon l'une quelconque des revendications précédentes,
dans lequel les deux portions latérales des éléments de couverture (30, 40) constituant ladite section de dossier de siège (30) et la section de coussin de siège (40) sont repliées vers le côté arrière respectivement, et des parties correspondantes situées sur les éléments de châssis (21b, 22b) sont formées en au moins une structure double.

14. Siège de véhicule (10) selon l'une quelconque des revendications précédentes,
dans lequel l'élément de couverture (30) constituant ladite section de dossier de siège (30) est soutenu par les éléments de châssis (21 b, 22b) de telle sorte que les deux portions latérales soient en protubérance vers l'avant à partir d'une partie intérieure correspondante et l'élément de couverture (40) constituant ladite section de coussin de siège (40) soit soutenu par les éléments de châssis (21b, 22b) de telle sorte que les deux portions latérales soient en protubérance vers le haut à partir d'une partie intérieure correspondante.

15. Siège de véhicule (10) selon la revendication 14,
dans lequel des portions limites entre les deux portions latérales (30c, 40c) dans les éléments de couverture (30, 40) constituant ladite section de dossier de siège (30) et la section de coussin de siège (40), et les parties intérieures sont formées en une forme de rainure.

16. Siège de véhicule (10) selon la revendication 15,
dans lequel lesdites portions limites sont formées en joignant une couche de maille avant (110), des piles (130) et une couche de maille arrière (120) de l'élément de filet (100) constituant l'élément de couverture les unes aux autres au moyen d'un soudage par vibration.

17. Siège de véhicule (10) selon la revendication 15,
dans lequel lesdites portions limites sont formées en joignant une couche de maille avant (110), des piles (130) et une couche de maille arrière (120) de l'élément de filet (100) constituant l'élément de couverture (30, 40) les unes aux autres dans un état semi-écrasé au moyen d'un soudage par vibration et par la suite, en leur appliquant en plus un moyen de couture.
